Europäisches Patentamt

European Patent Office

Office européen des brevets

(11) Veröffentlichungsnummer: **0 172 340**
B1

# (12) EUROPÄISCHE PATENTSCHRIFT

(45) Veröffentlichungstag der Patentschrift:
30.03.88

(51) Int. Cl.⁴: **F 16 F 1/36,** A 47 C 7/24

(21) Anmeldenummer: **85107289.2**

(22) Anmeldetag: **13.06.85**

(54) **Energie aufnehmende Kunststoff-Formteile.**

(30) Priorität: **09.08.84 DE 3429307**

(43) Veröffentlichungstag der Anmeldung:
**26.02.86 Patentblatt 86/9**

(45) Bekanntmachung des Hinweises auf die Patenterteilung:
**30.03.88 Patentblatt 88/13**

(84) Benannte Vertragsstaaten:
**CH DE FR GB IT LI NL**

(56) Entgegenhaltungen:
**DE - A - 2 942 174
DE - B - 1 081 279
DE - B - 1 109 463
FR - A - 1 448 534
FR - A - 1 561 375
FR - A - 2 195 157
FR - A - 2 351 318
GB - A - 622 402
US - A - 2 661 942
US - A - 3 815 887**

(73) Patentinhaber: **HÜLS AKTIENGESELLSCHAFT, - RSP Patente / PB 15 - Postfach 13 20, D-4370 Marl 1 (DE)**

(72) Erfinder: **Mörwald, Karl, Emslandstrasse 3, D-4370 Marl (DE)**

**Beschreibung**

In verschiedenen Bereichen der Technik, besonders in der Fahrzeugtechnik und im Transportwesen, setzt man zum Abfangen von Bewegungsenergien, von Stössen, Schwingungen und dergleichen Elemente und Konstruktionseinheiten ein, welche imstande sind, die entsprechende Energieeinwirkung aufzufangen.

Konstruktionen über Federelemente bis hin zu Karosserierahmenkonstruktionen zur Aufnahme einer Auffahrenergie sind bekannt. Es fehlt aber noch immer an einfachen Formteilen, die in der Massenfertigung herstellbar sind, die geringere bis mittlere dynamische Belastung, Aufschlagsenergie, Stösse oder Schwingungen aufnehmen und die entweder als Kunststoffelement an vorhandene Formteile aus Kunststoff oder anderen Werkstoffen aufmontiert werden können oder als Formteil selbst die erforderlichen Konstruktionsmerkmale tragen.

Diese Aufgabe wird in der aus den Patenansprüchen ersichtlichen Weise elegant gelöst. Erfindungsgemäss entspricht die Verformungsarbeit, d.h. zum Beispiel die Schädigungsarbeit bei einer Stossbelastung, dem Verformungswiderstand der Elemente, wobei der Weg der Schädigungsverformung gleich dem Weg der Lageveränderung der Gelenklinien ist, wobei ein Teil der Formteilbestandteile eine elastische Formveränderung erfährt.

Man erreicht dieses Ziel durch ein ggf. wiederkehrendes Kniehebelsystem, dessen Beweglichkeit durch mehrere Gelenke erreicht wird. In jedem System sind drei Gelenke erforderlich. Als Gelenk gilt grundsätzlich das an sich bekannte Filmscharnier. Dieses kann auch ganz oder teilweise durch ein Scharniergelenk ersetzt sein, welches, wenn es durch Aufsprengen lösbar ist, den Vorteil bietet, gewünschtenfalls auskuppelbar zu sein, so dass man einzelne von mehreren wiederkehrenden Kniehebeleinheiten ausser Betrieb nehmen und derart das Gesamtsystem auf die weiche Aufnahme geringerer Belastungen einstellen kann.

Die Kunststoff-Formteile, die derart wenigstens drei Gelenklinien enthalten, lassen sich im Kunststoff-Spritzguss herstellen, wobei ein mit Filmscharniergelenken ausgestattetes Teil in einem Stück gefertigt wird. Bevorzugt fertigt man die Formteile z.B. durch Anbringung von Rippen so, dass die drei Gelenklinien unter Belastung nicht in die gestreckte Totpunktlage oder gar darüber hinaus geraten können.

Aus der FR-A-1 561 375 ist ein aus Kunststoff gefertigtes Kniehebelsystem bekannt, das bei Druckeinwirkung aus einer stabilen Totlage in eine zweite übergeht, wobei die Filmscharniere vorübergehend elastisch komprimiert werden, während die bewegten Formteile starr bleiben. Die Beendigung der Druckeinwirkung führt nicht zur Rückstellung des Systems, und daher ist diese Konstruktion nicht zur wiederholten Aufnahme von Stossenergie imstande.

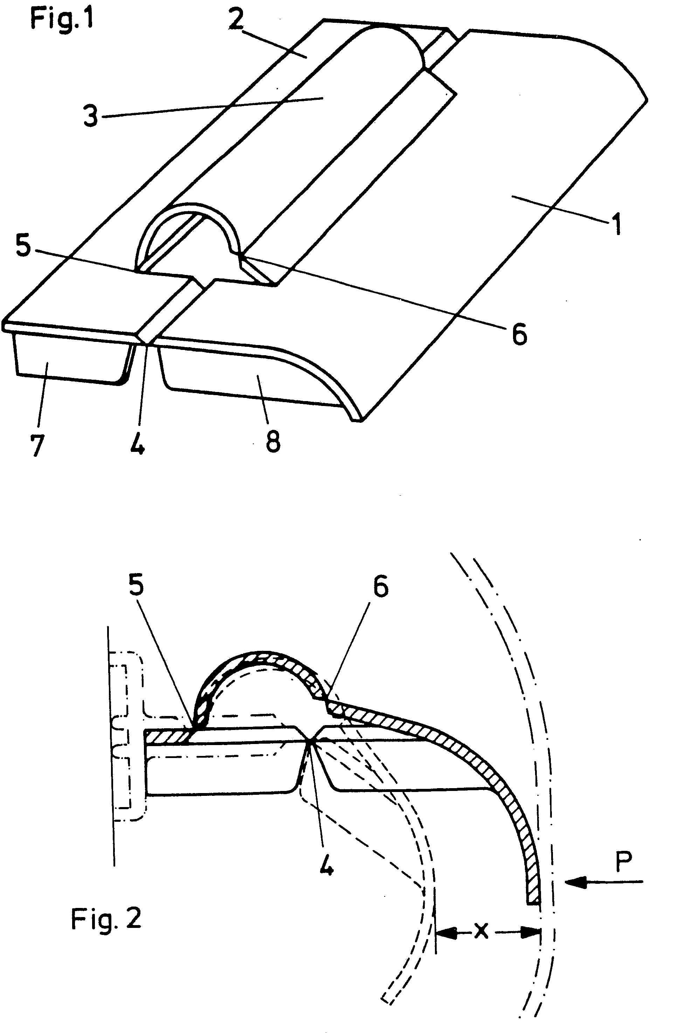

Fig. 1 zeigt ein Formteil, das im wesentlichen aus dem unbeweglichen, mit dem zu schützenden Gegenstand zu verbindenden Teil 2 und aus dem beweglichen Teil 1 besteht; beide Teile sind durch das Filmscharnier 4 miteinander verbunden und um dieses bis zum Anschlag der Rippen 7 und 8 drehbar.

Beide Teile sind ausserdem über die Filmscharniere 5 und 6 mit dem Rohrsegment 3 verbunden.

Wie Fig. 2 erkennen lässt, schwenkt Teil 1 bei Belastung P um die Drehachse 4; damit wird auch die Gelenkachse 6 geschwenkt und das Rohrsegment 3, welches über die Gelenkachse 5 mit dem Teil 2 und Gelenkachse 6 mit dem Teil 1 verbunden ist, im elastischen Bereich des Kunststoffmaterials verformt. Die Gelenke 4 und 5 verändern hierbei nicht die Lage, während das Gelenk 6 sich um 4 dreht, jedoch nicht die Totlage erreicht, so dass die Drehpunkte 5, 4 und 6 in der Endlage keine gestreckte Linie bilden. Die über Teil 1 eingeleitete Verformungsarbeit wird durch die Auflage der Rippen 7 und 8 auf den Hubweg X begrenzt. Bei der Entlastung des Teiles 1 bewirkt der Spannungszustand im Teil 3 die Rückstellung in die Ausgangslage.

In der Abbildung ist ein Formteil mit nur einer Gelenk-, d.h. Verformungseinheit dargestellt, wobei selbstverständlich die Anordnung mehrerer Gelenkeinheiten möglich und vielfach zweckmässig ist.

Bei dieser Ausführungsform soll bevorzugt der Höhenabstand der Gelenklinie 6 zu der Gelenklinie 4 mindestens das 3fache des Höhenabstandes der Gelenklinie 4 zur Gelenklinie 5 betragen, um eine ausreichende Verformungsspannung sowie Rückstelleigenschaften im Rohrsegment 3 zu erzielen. Ebenso sollen sich die Längenabstände der Gelenklinien verhalten, d.h. der Längenabstand der Gelenklinie 5 zur Gelenklinie 4 soll mindestens des 3fache des Längenabstandes der Gelenklinie 4 zur Gelenklinie 6 betragen.

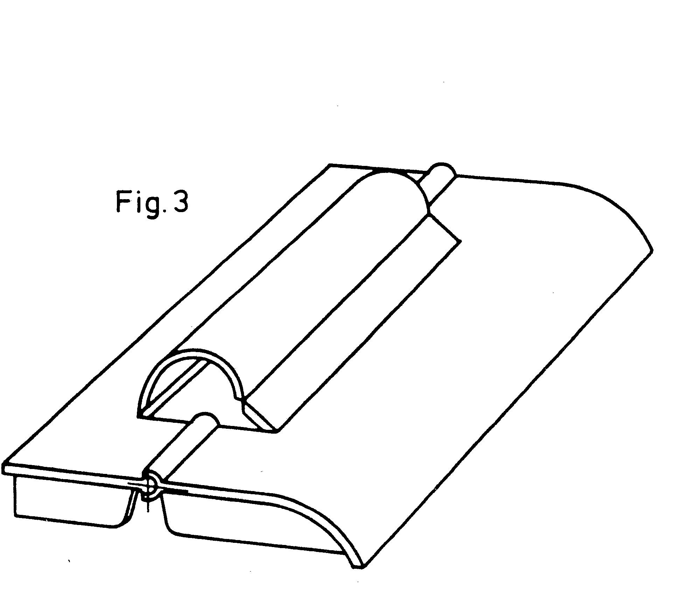

Fig. 3 zeigt die Konstruktion der Fig. 1 mit dem Unterschied, dass das Gelenk 4 nicht als Filmscharnier, sondern als Scharniergelenk ausgebildet ist.

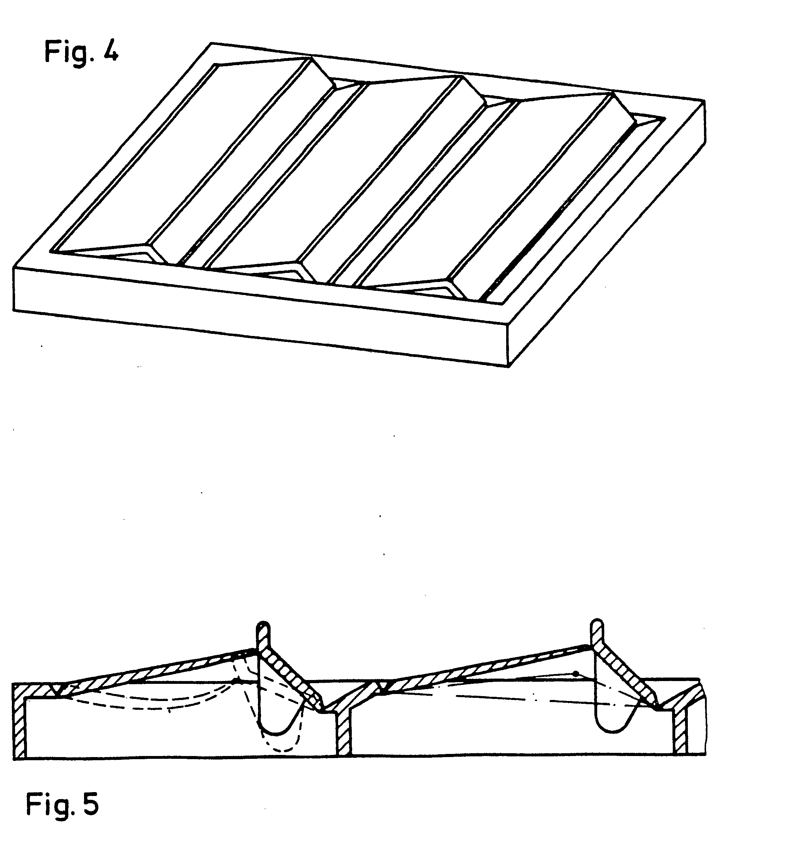

Fig. 4 zeigt ein Formteil, welches aus einem Rahmen besteht, der z.B. drei satteldachartige Ausbildungen besitzt, die jeweils ein dreifaches Filmscharniersystem enthalten. Die längere Schenkelplatte ist so ausgebildet, dass sie beim Abschwenken zwangsläufig deformiert wird. Der z.B. durch Rippen begrenzte Verformungsweg verhindert das Erreichen der gestreckten Lage des Systems. Dies wird aus Fig. 5 deutlich, in welcher, abweichend von Fig. 4, der kürzere Schenkel mit einer senkrechten Stabilisierungsrippe ausgestattet ist. Bei Belastung bleiben die äusseren Gelenklinien in ihrer Lage unverändert, d.h. nur die mittlere Linie verändert ihre Lage.

Eine derartige Verformungseinheit ist vor allem als Unterkonstruktion geeignet.

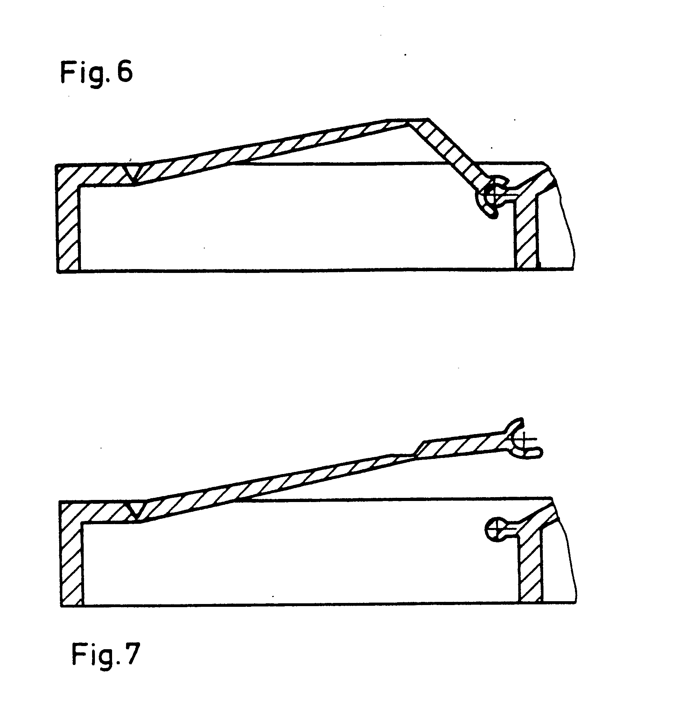

Fig. 6 und 7 zeigen als Ausschnitt ein analoges Formteil wie Fig. 4 und 5, jedoch mit dem Unterschied, dass ein Element des Filmscharniersystems als auskuppelbares Scharniergelenk ausgebildet ist. Es ist dadurch möglich, innerhalb einer Konstruktionseinheit einige Scharniereinheiten auszukuppeln und damit die Grösse der Belastungsaufnahme zu verändern.

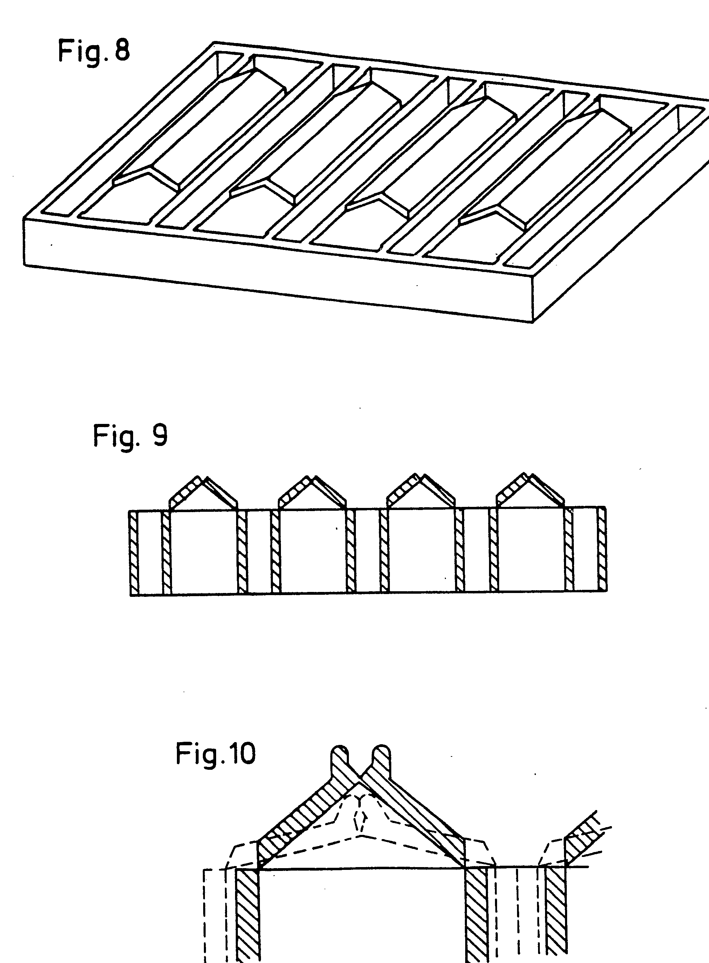

Aus Fig. 8 und 9 ist ein Energie aufnehmendes Kunststoff-Formteil im unbelasteten Zustand ersichtlich. Es besteht aus einem Rahmen mit satteldachartigen Ausbildungen, die je aus einem Dreier-Filmscharniersystem bestehen. Unter Belastung verändern alle Scharnierlinien ihre Lage; wie Fig. 10 erkennen lässt, werden hier, jedenfalls im mittleren Bereich, die Rahmenzwischenwände bis zum gegenseitigen Anliegen verformt. Dadurch wird das Erreichen der gestreckten Lage aller drei Scharnierlinien vermieden. Diese Konstruktion ist ein Beispiel für den Fall, dass nicht ein Schenkel des Kniehebelsystems, sondern die integrierte Formteilkonstruktion verformt wird.

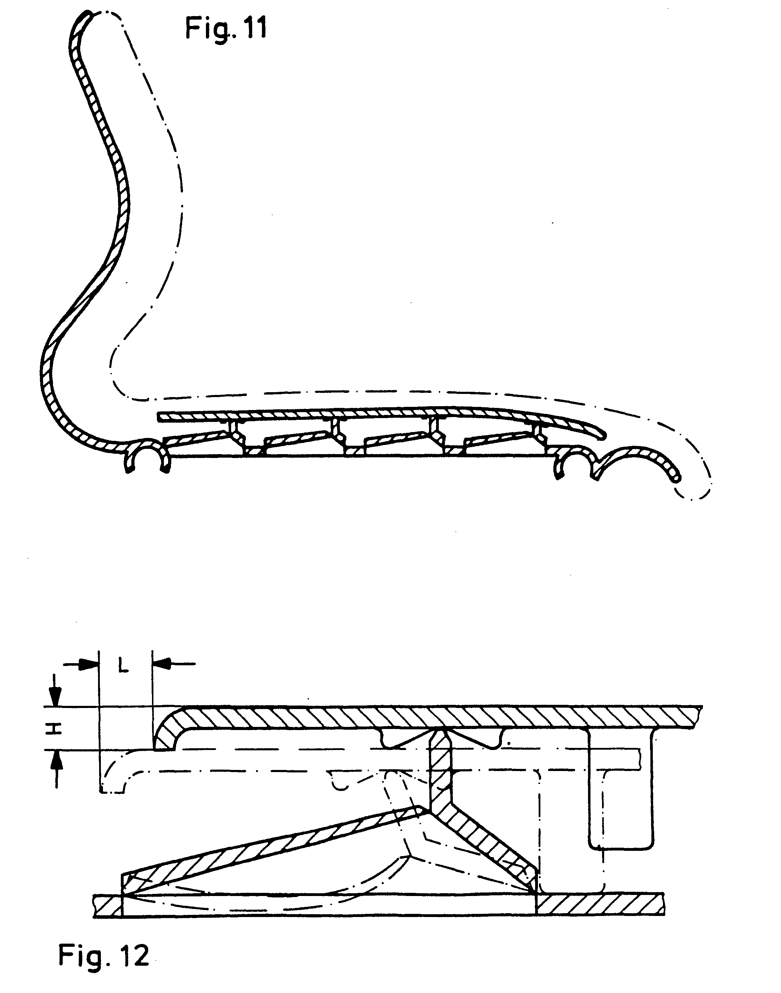

Fig. 11 und 12 zeigen als Anwendungsbeispiel eine selbsttragende Kunststoff-Sitzschale, bei der die Unterkonstruktion der Sitzflächenpartie mit satteldachartigen Ausbildungen ähnlich Fig. 5 versehen ist, die jeweils ein Dreier-Filmscharniersystem bilden. Die Unterkonstruktion ist durch die eigentliche Sitzplatte abgedeckt. Wird die Sitzplatte belastet, so verändert sie sich in der Höhe bis um den Höhensprung H und in der Waagerechten um das Mass L. Hierbei tritt eine Axialbewegung gegen die Lehnenseite ein, d.h. die sitzende Person wird an die Lehne gedrückt. Diese Konstruktion zeigt demnach die Verbindung des mittleren Gelenkes mit einem weiteren Formteil, welches bei Belastung die Bewegung des mittleren Gelenkes übernimmt.

## Patentansprüche

1. Kunststoff-Formteil, bei dem ein Teil bei Belastung eine elastische Formveränderung erfährt und nach der Entlastung in die Ausgangslage zurückkehrt, dadurch gekennzeichnet, dass einzelne, ggf. wiederkehrende Bereiche (1, 2, 3) des Formteils über Gelenke (4, 5, 6) zu einem bzw. mehreren Kniehebelsystemen verbunden sind, die jeweils drei Filmscharniere oder Gelenkverbindungen besitzen und am Erreichen des Totpunktes gehindert sind und bei denen bei Belastung die Wege der Gelenklinien verformend in einem Schenkel des Kniehebelsystems oder in die integrierte Formteilkonstruktion wirken.

2. Kunststoff-Formteil nach Anspruch 1, dadurch gekennzeichnet, dass bei wiederkehrenden Kniehebelsystemen ein Teil der Gelenkverbindungen ausgekuppelt ist.

3. Kunststoff-Formteil nach den Ansprüchen 1 und 2, dadurch gekennzeichnet, dass der Schenkel des Gelenksystems als beidseitig in Gelenken gelagertes Rohrsegment ausgebildet ist, von denen nur eines unter Belastung seine Lage verändert.

4. Kunststoff-Formteil nach den Ansprüchen 1 und 2, dadurch gekennzeichnet, dass die Schenkel des Kniehebelsystems eine ungleiche Hebellänge haben und der längere Schenkel unter Belastung die rückstellbare Verformung annimmt.

5. Kunststoff-Formteil nach den Ansprüchen 1, 2 und 4, dadurch gekennzeichnet, dass der Schenkel des Kniehebelsystems als Plattensegment ausgebildet ist, von dessen je drei Gelenken nur das mittlere unter Belastung seine Lage verändert.

6. Kunststoff-Formteil nach den Ansprüchen 1 und 2, dadurch gekennzeichnet, dass beide Schenkel des Kniehebelsystems die gleiche Hebellänge haben und unter Belastung alle drei Gelenklinien ihre Lage verändern, wobei die an den äusseren Gelenklinien beginnenden Rippen sich bis zur gegenseitigen Abstützung vor dem Erreichen der Totpunktlage verformen.

7. Kunststoff-Formteil nach den Ansprüchen 1, 2, 4 und 5, dadurch gekennzeichnet, dass das mittlere Gelenk mit einem weiteren Formteil verbunden ist, welches bei Belastung die Bewegung des mittleren Gelenkes übernimmt.

## Claims

1. A plastic moulding, in which a part experiences an elastic deformation when loaded and reverts to the original position when the load is removed, characterized in that individual, possibly recurring, regions (1, 2, 3) of the moulding are connected by means of joints (4, 5, 6) to form one or more toggle lever systems, which in each case have three film hinges or joint connections and are impeded on reaching the dead point and in which, when loaded, the displacements of the joint lines act, in deforming manner, into a limb of the toggle lever system or into the integrated moulding structure.

2. A plastics moulding according to claim 1, characterized in that, in the case of recurring toggle lever systems, some of the joint connections are uncoupled.

3. A plastic moulding according to claim 1 or 2, characterized in that the limb of the joint system is designed as a tube section, borne on both sides in joints, of which only one changes its position under load.

4. A plastic moulding according to claim 1 or 2, characterized in that the limbs of the toggle lever system have an unequal lever length and the longer limb assumes the recoverable deformation under load.

5. A plastic moulding according to claim 1, 2 or 4, characterized in that the limb of the toggle lever system is designed as a plate segment, only the middle of its three joints changing its position under load.

6. A plastic moulding according to claim 1 or 2, characterized in that both limbs of the toggle lever system have the same lever length and all three joint lines change their position under load, the ribs beginning at the outer joint lines deforming until they bear one against the other, before reaching the dead point position.

7. A plastic moulding according to claim 1, 2, 4 or 5, characterized in that the middle joint is connected to a further moulding, which takes over the movement of the middle joint when loaded.

## Revendications

1. Pièce moulée en matière plastique, dont une partie subit une déformation élastique sous charge et revient dans sa position de repos après décharge, caractérisée par le fait que quelques zones (1, 2, 3) de la pièce moulée qui se répètent éventuellement, sont reliées par des articulations (4, 5, 6) à un ou plusieurs systèmes à genouillère, qui possèdent chacun trois charnières pelliculaires ou assemblages articulés et qui sont bloqués avant que le point mort ne soit atteint, et dans lesquels les trajectoires des lignes d'articulation entraînent sous charge une déformation dans une aile du système ou sur l'ensemble de la pièce moulée.

2. Pièce moulée en matière plastique selon la revendication 1, caractérisée par le fait que dans le cas de systèmes à genouillère se répétant une partie des assemblages articulés est désaccouplée.

3. Pièce moulée en matière plastique selon les revendications 1 et 2, caractérisée par le fait que l'aile du système d'articulation se présente comme un segment de tube logé de chaque côté dans des articulations, dont une seulement change de position sous charge.

4. Pièce moulée en matière plastique selon les revendications 1 et 2, caractérisée par le fait que les ailes du système à genouillère n'ont pas toutes la même longueur de levier et que l'aile la plus longue subit sous charge la déformation élastique.

5. Pièce moulée en matière plastique selon les vendications 1, 2 et 4, caractérisée par le fait que l'aile du système à genouillère se présente comme un segment de plaque, dont une articulation seulement sur trois, celle du milieu, modifie sa position sous charge.

6. Pièce moulée en matière plastique selon les revendications 1 et 2, caractérisée par le fait que les deux ailes du système à genouillère ont la même longueur de levier et que les trois lignes d'articulation modifient sous charge leur position, les éléments partant des lignes d'articulation extérieures se déplaçant jusqu'à ce qu'ils s'appuient l'un sur l'autre avant d'atteindre le point mort.

7. Pièce moulée en matière plastique selon les revendications 1, 2, 4 et 5, caractérisée par le fait que l'articulation centrale est reliée à une autre pièce moulée, qui reçoit sous charge le mouvement de l'articulation centrale.

**Fig.1**

**Fig. 2**

Fig. 3

Fig. 4

Fig. 5

Fig. 6

Fig. 7

Fig. 8

Fig. 9

Fig. 10

Fig. 11

Fig. 12